# EUROPEAN PATENT SPECIFICATION

(11) **EP 2 228 281 B1**
(45) Date of publication and mention of the grant of the patent: **31.12.2014**
(21) Application number: 10380015.7
(22) Date of filing: 29.01.2010
(51) Int. Cl.: B62B 7/06, B62B 7/08

(54) **Foldable chassis for baby carriages**
Faltbares Gestell für Kinderwagen
Châssis pliable pour poussettes de bébé

(30) Priority: 13.03.2009 ES 200900497 U
(43) Date of publication of application: 15.09.2010
(73) Proprietor: Jané S.A., 08184 Palau Solita I Plegamans (Barcelona) (ES)
(72) Inventor: Jané Santamaria, Manuel, 08184 Palau Solita I Plegamans (Barcelona) (ES)
(74) Representative: Morgades y Manonelles, Juan Antonio

(56) References cited:
- EP-A2- 1 967 440
- WO-A1-02/094633
- FR-A1- 2 885 581
- GB-A- 2 056 376

## Description

### OBJECT OF THE INVENTION

### BACKGROUND OF THE INVENTION

Different models of foldable chassis for baby carriages have been known for years, although they have disadvantages such as excessive size when folded as well as the fact that once folded they do not stand up, making them difficult to handle and store.

Among the models for baby carriages there are those that have a rear frame with wheels at the sides, which is joined to a front wheel support by means of a beam and is articulated at the top to the sides of a U-shaped handlebar, the sides of the rear frame being joined by means of the linkage of a U-shaped element above which is the mentioned beam.

As prior art, the following patents are cited as well:
FR 2885581 A1, whose object is a trolley to transport goods in the markets of free service, which comprises a foldable chassis according to the preamble of claim 1, and which shows a base consisting of telescopic elements and when the trolley is folded said elements stretch determining an extra-flat folding.
GB 2056376 A, whose object is a foldable chassis for infant pushchair which comprises crossed and articulated elements at the sides and the base and the rear and front wheels are linked together with telescopic elements.

And EP 1967440 whose object is a foldable chassis for baby pushchairs comprising an element (that can be a telescopic one), that connects the rear part of the chassis with the front legs through a fork structure.

### SUMMARY OF THE INVENTION

The foldable chassis in this invention achieves more compact folding, as well as enabling them to stand up vertically.

A feature of this chassis is that the beam joining the rear frame to the front wheel support is telescopic and comprises components connected to the chassis elements that when folded make the beam retract automatically.

The elements that join the beam to the chassis elements comprise an articulation connected to one of the telescopic sections of the beam, joined to the U-shaped element of the chassis and which match with articulations on the other telescopic section of the beam by means of a brace.

These and other characterising features will be best made apparent by the following detailed description whose understanding will be made easier by the accompanying two sheets of drawings showing a practical embodiment being cited only by way of example not limiting the scope of the present invention.

### DESCRIPTION OF THE DRAWINGS

In the drawings:

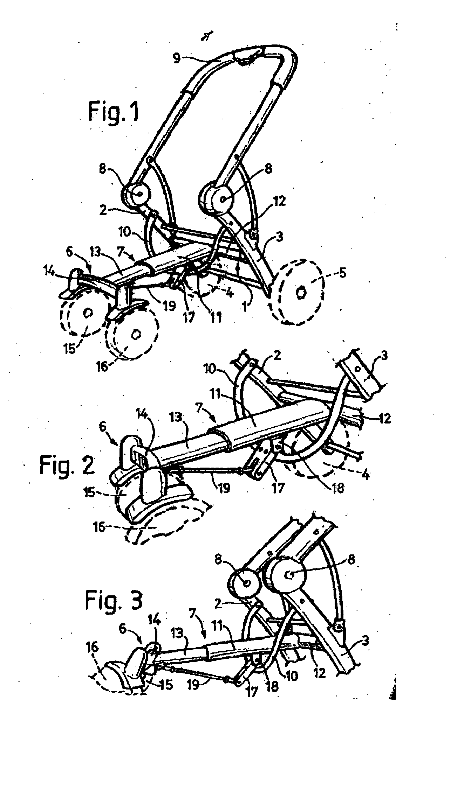

Figure 1 shows this chassis assembly unfolded,
Figures 2 and 3 show details of the telescopic beam and its relationship to the chassis,
Figure 4 is a side view of the telescopic beam semi-retracted,
Figure 5 shows the chassis in a folded state,
Figure 6 is a perspective detail view from below of the telescopic beam retracted, and
Figure 7 shows the chassis assembly folded and in upright position.

### DETAILED DESCRIPTION

According to the drawings of this foldable chassis for baby carriages, it comprises a rear frame (1) with wheels (4 and 5) on each side (2 and 3) which is joined to the front wheel support (6) by a beam (7) and it is articulated at its upper ends (8) to the sides of a U-shaped handlebar (9).

The sides (2 and 3) of the rear frame are joined together by means of the articulation of a U-shaped element (10) above which is the beam (7).

This beam is telescopic with a larger diameter section (11) joined to a crossbar (12) on the rear frame (1) and a smaller diameter section (13) joined to a crossbar (14) forming the front wheel support (6) to which the self-guiding wheels are fitted (15 and 16).

The beam (7) is linked to the chassis by means of a connecting articulation (17) pivoting on a support (18) secured to the bottom of the larger section (11) of the beam, secured to the U-shaped element (10) of the chassis, and which is joined by an articulation to the other section (13) of the beam by means of a rod (19).

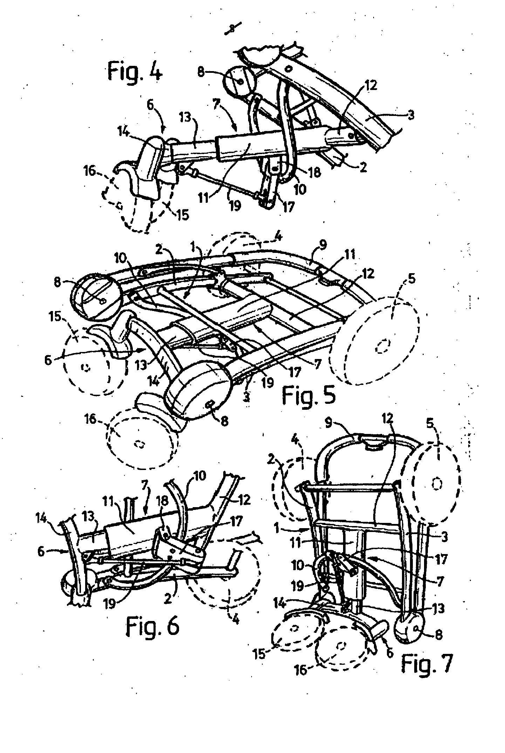

With this design, on folding the chassis, the U-shaped element (10) moves backwards (Fig. 4) pulling the connecting articulation (17) that in turn pulls the rod (19), which in turn pulls the smaller telescopic section (13) into the larger section (11), bringing the front wheel support (6) closer to the rear wheels (4 and 5) and thus resulting in a compact folding of the chassis (Fig. 5).

Once folded, the chassis can be stood upright as shown in Figure 7 resting on the articulations (8) and the crossbeam (14) with the wheels (15 and 16) horizontal.

The invention can within its essentiality be put into practice in other embodiments differing only in detail from the one having been described above only by way of example, said other embodiments also falling within the scope of the protection being claimed. This foldable chassis for baby carriages may thus be manufactured with the most suitable means and materials, and with the most convenient accessories, and the components may be replaced by others that are technically equivalent, as long as all of this is contained within the claims.

## Claims

1. Foldable chassis for baby carriages, which comprises a rear frame (1) with two side wheels (4, 5), joined to a front wheel support (6) by means of a beam (7) and is articulated (8) from the top to the sides of a U-shaped handlebar (9), the sides (2, 3) of the rear frame (1) being joined by means of the articulation of a U-shaped element (10) above which is the mentioned beam (7), where the beam (7) is telescopic (11, 13) and has elements connected to parts of the chassis which make the chassis automatically retract when the beam (7) is folded, **characterised by** the fact that the components linking the beam (7) to the chassis elements comprise an articulated connecting element (17) joined to one of the telescopic sections (11) of the beam (7), joined to the U-shaped element (10) of the chassis, and which is articulated to the other telescopic section (13) of the beam (7) by means of a rod (19).

## Patentansprüche

1. Zusammenklappbares Gestell für Kinderwagen bestehend aus einem hinteren Rahmen (1) mit zwei seitlichen Rädern (4, 5), welcher über einen Längsträger (7) mit der Halterung (6) der Vorderräder verbunden ist und an den Seitenteilen des U-förmigen Lenkers (9) jeweils ein Gelenk (8) aufweist, wobei die Seitenteile (2, 3) des hinteren Rahmens (1) über ein angelenktes, U-förmiges Verbindungselement (10) miteinander verbunden sind, über dem sich der besagte Längsträger (7) befindet, wobei der Längsträger (7) teleskopisch ausgeführt ist und Abschnitte (11, 13) aufweist, die mit Teilen des Gestells verbunden sind, so dass sich das Gestell automatisch zusammenzieht, wenn der Längsträger (7) zusammengefaltet wird, **dadurch gekennzeichnet, dass** die Abschnitte die den Längsträger (7) mit den Gestellteilen verbinden ein gelenkiges Verbindungselement (17) aufweisen, welches mit einem der Teleskopabschnitte (11) des Längsträgers (7), der auch mit dem U-förmigen Verbindungselement (10) des Gestells verbunden ist, verbunden ist und über eine Stange (19) am anderen Teleskopabschnitt (13) des Längsträgers (7) angelenkt ist.

## Revendications

1. Châssis pliable pour voitures d'enfant, qui comprend un cadre arrière (1) avec deux roues de côté (4, 5), joint au support des roues avant (6) au moyen d'un longeron (7) qui est articulé (8) du haut vers les côtés d'un guidon en U (9), les côtés (2, 3) du cadre arrière (1) sont joints au moyen d'articulation d'un élément (10) en forme de U par dessus duquel se trouve le longeron mentionné (7), de façon que le longeron (7) est télescopique et il a des sections (11, 13) reliées à des parties du châssis qui font le châssis se retirer automatiquement quand le longeron (7) est plié, **caractérisé par le fait que** les sections qui relient le longeron (7) aux éléments du châssis comprennent un élément de connexion articulé (17) joint à l'une des sections télescopiques (11) du longeron (7), joint à l'élément en forme de U (10) du châssis, et qui s'articule à l'autre section télescopique (13) du longeron (7) au moyen d'une tige (19).
